# EUROPÄISCHE PATENTSCHRIFT

(11) **EP 2 237 118 B1**
(45) Veröffentlichungstag und Bekanntmachung des Hinweises auf die Patenterteilung: **25.09.2013**
(21) Anmeldenummer: 10002339.9
(22) Anmeldetag: 06.03.2010
(51) Int. Cl.: G05B 19/042

(54) **Sicherheitssystem zur Sicherung einer fehlersicheren Steuerung elektrischer Anlagen und Sicherheitssteuerung damit**
Safety system for ensuring error-free control of electrical devices and safety device
Système de sécurité destiné à sécuriser la commande protégée contre l'erreur d'installations électriques et commande de sécurité équipée de celui-ci

(30) Priorität: 31.03.2009 DE 102009015683
(43) Veröffentlichungstag der Anmeldung: 06.10.2010
(73) Patentinhaber: Robert Bosch GmbH, 70469 Stuttgart (DE)
(72) Erfinder: Weber, Rupert, 63936 Schneeberg (DE)
(74) Vertreter: Thürer, Andreas

(56) Entgegenhaltungen:
- WO-A1-03/050624
- WO-A1-2005/036285

## Beschreibung

Die Erfindung bezieht sich auf ein Sicherheitssystem zur Sicherung einer fehlersicheren Steuerung technischer Anlagen und eine ein solches Sicherheitssystem umfassende Sicherheitssteuerung, und insbesondere auf ein solches Sicherheitssystem und eine Sicherheitssteuerung, das bzw. die einen Mehrkernprozessor umfasst.

Herkömmlicherweise gibt es Sicherheitssteuerungen für technische Anlagen, wie beispielsweise Werkzeugmaschinen, Druckmaschinen, Airbags in Kraftfahrzeugen usw., die durch ein elektrisches, elektronisches und/oder programmierbar elektronisches System gesteuert werden. Ein solches System ist zumeist aus mindestens einer integrierten Schaltung aufgebaut. Der Hauptbestandteil einer solchen integrierten Schaltung ist üblicherweise ein Mikrocontroller, welcher Speicher (z.B. RAM, ROM), einen Zeitgeber bzw. Timer, mindestens einen Mikroprozessor (CPU), einen Eingangsanschluss, einen Ausgangsanschluss und ein die Speicher, den Zeitgeber, die CPU(s), und die Eingangs-/Ausgangsanschlüsse miteinander verbindendes Bussystem aufweist. Der Mikrocontroller dient zur zentralen Steuerung des elektrischen, elektronischen und/oder programmierbar elektronischen Systems. Ist die Funktion des Mikrocontrollers aufgrund eines Fehlers, wie beispielsweise Überhitzung oder Überlastung beeinträchtigt, oder fällt der Mikrocontroller aufgrund eines Fehlers sogar ganz aus, ist die Funktion der gesamten zu steuernden technischen Anlage nicht mehr gewährleistet.

Bei Sicherheitssystemen, wie beispielsweise Airbags in Fahrzeugen, Steuerung von Werkzeugmaschinen, Kernkraftwerken, Eisenbahnen oder Flugzeugen usw., ist es aus Sicherheitsgründen zum Schutz von Menschenleben oder zur Vermeidung eines großen wirtschaftlichen Schadens, üblicherweise gefordert, einen Ausfall des diese technischen Anlagen steuernden Mikrocontrollers zu vermeiden, bzw. die von dem Mikrocontroller gesteuerte technische Anlage in einen fehlersicheren Betrieb zu überführen.

Zur Erfüllung dieses Bedarfs sind bereits viele Maßnahmen vorgeschlagen worden, welche jedoch unterschiedliche, in der internationalen Norm IEC 65108 definierte Sicherheitsstandards erfüllen. Diese internationale Norm befasst sich mit der Funktionssicherheit von elektrischen, elektronischen und programmierbar elektronischen (E/E/PE) sicherheitsbezogenen Systemen, das heißt E/E/PE-Systemen, die eine Sicherheitsfunktion ausführen. Der Geltungsbereich der Norm erstreckt sich über Konzept, Planung, Entwicklung, Realisierung, Inbetriebnahme, Instandhaltung, Modifikation bis hin zur Außerbetriebnahme und Deinstallation sowohl des gefahrverursachenden Systems als auch der sicherheitsbezogenen (risikomindernden) Systeme. Die Norm bezeichnet die Gesamtheit dieser Phasen als "gesamten Sicherheitslebenszyklus".

Ein Bestandteil der internationalen Norm IEC 65108 ist die Bestimmung der Sicherheitsanforderungsstufe ("Safety Integrity Level" - SIL), wobei vier Stufen, von SIL 1 bis SIL 4, festgelegt sind. Jede Sicherheitsanforderungsstufe steht für ein Maß für die notwendige bzw. erreichte risikomindernde Wirksamkeit der Sicherheitsfunktionen, z.B. für die verbleibende (gefahrbringende) Versagenswahrscheinlichkeit. Hierbei ist SIL 1 die Sicherheitsanforderungsstufe, bei der die geringsten Anforderungen an die notwendige bzw. erreichte risikomindernde Wirksamkeit der Sicherheitsfunktionen gestellt sind, und SIL4 die Sicherheitsanforderungsstufe mit den höchsten Anforderungen.

In vielen Bereichen der Technik, wie beispielsweise bei Werkzeugmaschinen, Druckmaschinen, Holzbearbeitung,..., wird zunehmend die Einhaltung der Sicherheitsanforderungsstufe SIL3 für in die Maschine eingebaute Sicherheitssysteme gefordert. Zudem besteht oftmals die Anforderung, solche Sicherheitssysteme so klein und so günstig wie möglich auszuführen.

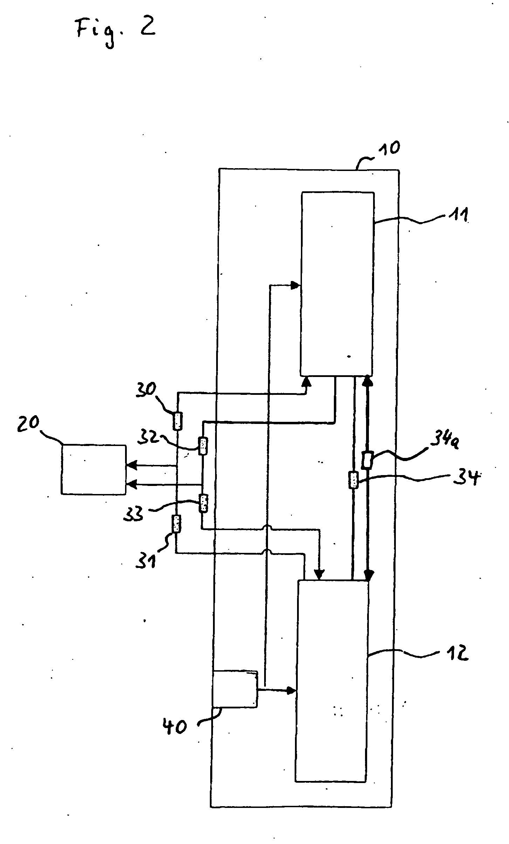

Auch in der WO 2005/036285 A1 ist eine Schaltungsanordnung für sicherheitskritische Anwendungen offenbart, welche gemäß Fig.2 unter anderem einen ersten Watchdog 7, welcher eine unabhängige Zeitbasis (Clock 10') zur zeitlichen Taktung (Clock 10) des Mikroprozessor aufweist, aufzeigt. Die Prozessorkerne sind innerhalb einer Funktionsbaugruppe angeordnet, welche mittels entsprechender Isolationszonen voneinander getrennt sind, wobei jedoch zwischen den einzelnen Prozessorkernen keine derartige Isolationszone besteht. Des Weiteren erfolgt bei einem Vorhandensein derartiger Isolationszonen eine Übertragung über die Leitungen zwischen den Funktionsbaugruppen lediglich unidirektional (vgl. Seite 12, Absatz 1), während zwischen den Prozessorkernen gar keine Übertragung stattfindet.
Ein kleines und kostengünstiges Sicherheitssystem kann beispielsweise mit einem Mikrocontroller erzielt werden, der einen Mehrkernprozessor hat, der mehr als einen vollständigen Hauptprozessor bzw. Kern aufweist. Derzeit gibt es auf dem Markt bereits Mehrkernprozessoren mit zwei Kernen (Dual-Core-Prozessor), drei Kernen, vier Kernen (Quad-Core-Prozessor), sechs oder acht Kernen. Zudem sind Mehrkernprozessoren mit bis zu 100 Kernen in Planung.

Allerdings bereitet es derzeit jedoch noch Probleme, ein Sicherheitssystem bereitzustellen, das einen Mehrkernprozessor aufweist, und somit kleiner und kostengünstiger als herkömmliche Sicherheitssysteme mit einem Prozessor mit nur einem Prozessorkern sind, und gleichzeitig in der Lage ist, die Sicherheitsanforderungsstufe SIL3 der internationalen Norm IEC 65108 zu erfüllen.

Es ist Aufgabe der vorliegenden Erfindung, ein kleines und kostengünstiges Sicherheitssystem mit einem Mehrkernprozessor mit mindestens zwei Prozessorkernen und eine das Sicherheitssystem umfassende Sicherheitssteuerung bereitzustellen, welche die vorangehenden Probleme des Standes der Technik lösen und die Sicherheitsanforderungen SIL3 der internationalen Norm IEC 65108 erfüllen.

Diese Aufgabe wird unter anderem durch das Sicherheitssystem gemäß Patentanspruch 1 gelöst. Das Sicherheitssystem dient zur Sicherung einer fehlersicheren Steuerung technischer Anlagen und hat einen Mehrkernprozessor, der mindestens zwei Prozessorkerne umfasst, und eine von dem Mehrkernprozessor separate Überwachungseinrichtung. Die Überwachungseinrichtung dient zur Überwachung der mindestens zwei Prozessorkerne dahingehend, ob die zeitliche Taktung und die logische Funktion der mindestens zwei Prozessorkerne vorbestimmte Sicherheitskriterien erfüllt.

Vorteilhafte Ausgestaltungen des Sicherheitssystems sind in den abhängigen Patentansprüchen dargelegt.

Vorzugsweise ist die Überwachungseinrichtung zudem zur Generierung des sicheren Zustandes, wenn die Überwachungseinrichtung als Ergebnis ihrer Überwachung erkennt, dass dieser Prozessorkern nicht die vorbestimmten Sicherheitskriterien erfüllt, ausgestaltet.

Erfingdungsgemäß hat die Überwachungseinrichtung eine von der zeitlichen Taktung der mindestens zwei Prozessorkerne unabhängige Zeitbasis.

Es ist vorteilhaft, dass die Überwachungseinrichtung jeweils über mindestens einen elektrischen Widerstand (elektrische Entkopplung) an die mindestens zwei Prozessorkerne angeschlossen ist. Hierbei kann die Überwachungseinrichtung Ober einen ersten elektrischen Widerstand an einen ersten Prozessorkern der mindestens zwei Prozessorkerne angeschlossen sein, und die Überwachungseinrichtung kann über einen zweiten elektrischen Widerstand an einen zweiten Prozessorkern der mindestens zwei Prozessorkerne angeschlossen sein, und der erste und zweite Widerstand können an ihrem an die Überwachungseinrichtung angeschlossenen Ende aneinander angeschlossen sein. Ferner kann die Überwachungseinrichtung über einen dritten elektrischen Widerstand an den ersten Prozessorkern angeschlossen sein, und die Überwachungseinrichtung kann über einen vierten elektrischen Widerstand an den zweiten Prozessorkern angeschlossen sein, und der dritte und vierte Widerstand können an ihrem an die Überwachungseinrichtung angeschlossenen Ende aneinander angeschlossen sein.

Vorzugsweise sind die vorbestimmten Sicherheitskriterien durch Sicherheitsanforderungen gemäß der Sicherheitsanforderungsstufe SIL3 der internationalen Norm IEC 65108 bestimmt.

Die mindestens zwei Prozessorkerne können eine gemeinsame Zeitbasis haben und sie sind erfindungsgemäß derart ausgestaltet, dass sie sich gegeneinander überwachen können.

Erfindungsgemäß sind jeweils zwei der zumindest zwei Prozessorkerne über einen (fünften) elektrischen Widerstand aneinander angeschlossen, so dass eine Kommunikation zwischen den aneinander (entkoppelt) angeschlossenen Prozessorkernen möglich ist.

Die vorgenannte Aufgabe wird zudem durch eine Sicherheitssteuerung zur fehlersicheren Steuerung technischer Anlagen nach Patentanspruch 10 bereitgestellt. Die Sicherheitssteuerung hat ein Sicherheitssystem wie zuvor beschrieben.

In einer vorteilhaften Ausführungsform verwendet die Sicherheitssteuerung ein Sicherheitssystem wie zuvor beschrieben, wobei der Mehrkernprozessor Teil der technischen Anlage ist, die fehlersicher zu steuern ist, und die Überwachungseinrichtung Teil der Sicherheitssteuerung ist.

Auf diese Weise wird eine Sicherheitssteuerung für oder mit einem Mehrkernprozessor bereitgestellt, die für ein elektrisches, elektronisches und/oder programmierbar elektronisches System verwendet werden kann, das zum fehlersicheren Betrieb von technischen Anlagen eingesetzt wird, und sowohl preisgünstig und platzsparend ist als auch die Sicherheitsanforderungsstufe SIL3 der internationalen Norm IEC 65108 erfüllt.

Nachfolgend wird die Erfindung unter Bezugnahme auf die beiliegende Zeichnung ausführlicher beschrieben. Es zeigen:
- Fig. 1: ein Blockschaltbild eines Sicherheitssystems gemäß einem ersten Ausführungsbeispiel der Erfindung;
- Fig. 2: ein Blockschaltbild eines Sicherheitssystems gemäß einem zweiten Ausführungsbeispiel der Erfindung; und
- Fig. 3: ein Blockschaltbild eines Sicherheitssystems gemäß einem dritten Ausführungsbeispiel der Erfindung.

### (Erstes Ausführungsbeispiel)

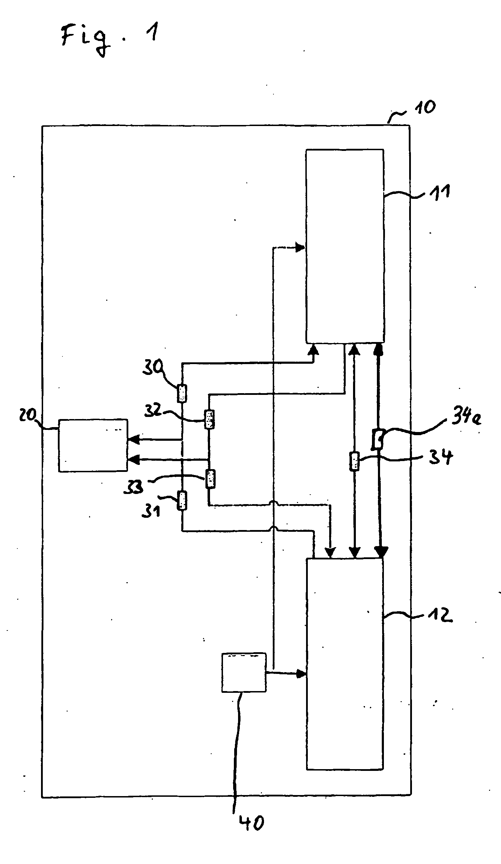

Das in Fig. 1 gezeigte Sicherheitssystem 1 umfasst einen Mehrkernprozessor 10 mit einem ersten Prozessorkern 11 und einem zweiten Prozessorkern 12. An den ersten und zweiten Prozessorkern 11, 12 ist eine Überwachungseinrichtung 20, bzw, ein Watchdog, jeweils über einen ersten bis vierten elektrischen Widerstand 30, 31, 32, 33 elektrisch angeschlossen. Der erste und zweite Prozessorkern 11, 12 sind über einen fünften und sechsten Widerstand 34, 34a elektrisch aneinander angeschlossen. Der erste und zweite Prozessorkern 11, 12 wird über einen Taktgenerator 40 mit einer gemeinsamen Zeitbasis versorgt.

Wie in Fig. 1 gezeigt, ist die Überwachungseinrichtung 20 über den ersten elektrischen Widerstand 30 an den ersten Prozessorkern 11 angeschlossen, und sie ist über den zweiten elektrischen Widerstand 31 an den zweiten Prozessorkern 12 angeschlossen, wobei der erste und zweite Widerstand 30, 31 an ihrem an die Überwachungseinrichtung 20 angeschlossenen Ende aneinander angeschlossen sind. Auf diese Weise wird eine zweiseitige Kommunikation zwischen der Überwachungseinrichtung 20 und dem ersten Prozessorkern 11 ermöglicht.

Außerdem ist in Fig. 1 gezeigt, dass die Überwachungseinrichtung 20 zudem über den dritten elektrischen Widerstand 32 an den ersten Prozessorkern 31 angeschlossen ist, und die Überwachungseinrichtung 20 über den vierten elektrischen Widerstand 33 an den zweiten Prozessorkern 12 angeschlossen ist, wobei der dritte und vierte Widerstand 32, 33 an ihrem an die Überwachungseinrichtung 20 angeschlossenen Ende aneinander angeschlossen sind. Auf diese Weise wird eine zweiseitige Kommunikation zwischen der Überwachungseinrichtung 20 und dem ersten Prozessorkern 12 ermöglicht.

Die Kommunikation findet vorzugsweise über die Widerstände 34, 34a statt. Die Widerstände 31-34 dienen vorteilhaft der Entkopplung der Prozessorkerne 11, 12 und der Überwachungseinrichtung 20, so dass bei Defekt einer dieser Komponenten eine gegenseitige Beeinflussung vermieden (ausgeschlossen) wird. (z.B. Defekt eines Kerns, der zum Kurzschluss u/o Festlegung seiner Ausgänge führt, würden ohne diese Entkopplung auch die anderen angeschlossenen Komponenten beeinflussen, z. B. deren Funktion stören und ggf. zu deren Defekt führen)

Über den ersten bis vierten Widerstand 30, 31, 32, 33 wird zudem eine elektrische Entkoppelung der Überwachungseinrichtung von dem ersten und zweiten Prozessorkern 11, 12 erzielt. Auf diese Weise kann die Überwachungseinrichtung 20 auch bei Defekten von Prozessorkerne 11 u/o 12 weiterhin unabhängig arbeiten und wird nicht durch den oder die Prozessorkerne 11, 12 beeinflusst. Das heißt, die Überwachungseinrichtung 20 verfügt über einen von den Prozessorkernen 11, 12 unabhängigen Abschaltpfad.

Der Taktgenerator 40 kann in dem Mehrkernprozessor 10 angeordnet sein. Alternativ kann der Taktgenerator 40 von außen an den Mehrkernprozessor 10 angeschlossen sein.

In Fig. 1 sind ferner der erste Prozessorkern 11 und der zweite Prozessorkerne 12 innerhalb des Mehrkernprozessors 10 über den fünften elektrischen Widerstand 34 sowie den sechsten elektrischen Widerstand 34a aneinander angeschlossen. Auf diese Weise ist eine zweiseitige Kommunikation zwischen den aneinander angeschlossenen Prozessorkernen 11, 12 möglich, wenn der fünfte elektrische Widerstand 34 sowie der sechste elektrische Widerstand 34a mit entsprechenden Kommunikationsanschlüssen der Prozessorkerne 11, 12 verbunden ist. Ober eine derartige Kommunikation kann eine gegenseitige Überwachung der beiden Prozessorkerne 11, 12 erfolgen, die gemäß dem bekannten Stand der Technik durch Hardware oder Software realisiert werden kann, Zudem wird über den fünften Widerstand 34 sowie den sechsten elektrischen Widerstand 34a eine elektrische Entkoppelung des ersten und zweiten Prozessorkerns 11, 12 erzielt.

Nun wird der Betrieb des in Fig. 1 gezeigten Sicherheitssystems 1 beschrieben.

Die Überwachungseinrichtung 20 überwacht die Einhaltung von Zeiten und der aktuellen Abweichung des Takts der beiden Prozessorkerne 11, 12 untereinander und von dem von dem für beide Prozessorkerne 11, 12 gemeinsam vorgegebenen Takt durch den Taktgenerator 40. Über bestimmte Triggercodes, die der jeweilige Prozessorkern 11, 12 erzeugt, kann eine Erwartungshaltung des jeweiligen Prozessorkerns 11, 12 geprüft werden.

Durch die zuvor beschriebene Ausgestaltung des Sicherheitssystems 1 kann die Überwachungseinrichtung 20 die beiden Prozessorkerne 11, 12 gegeneinander überwachen. Hierzu überprüft die Überwachungseinrichtung 20 eine zeitliche und/oder logische Erwartungshaltung, welche die Prozessorkerne 11, 12 für einen fehlersicheren Betrieb der mit ihnen zu steuernden Anlage erfüllen müssen. Die zeitliche und/oder logische Erwartungshaltung kann durch die Sicherheitsanforderungsstufen der internationalen Norm IEC 65108 festgelegt sein und insbesondere die Sicherheitsanforderungsstufe SIL3 sein.

Stellt die Überwachungseinrichtung 20 fest, dass die zeitliche und/oder logische Erwartungshaltung, welche die Prozessorkerne 11, 12 erfüllen müssen, nicht erfüllt ist, das heißt stellt sie einen Fehler der Prozessorkerne 11, 12 fest, können sowohl die Überwachungseinrichtung 20 als auch die Prozessorkerne 11, 12 unabhängig voneinander die Erzeugung neuer Daten sperren und/oder einen Stopp des fehlerhaften Prozessorkerns auslösen.

Bei der Sperrung der Erzeugung neuer Daten und/oder dem Stopp des fehlerhaften Prozessorkerns kann nur die Erzeugung eines neuen Protokolls verhindert werden. Aufgrund dessen gehen die angeschlossenen Sicherheitskomponenten des Sicherheitssystems 1 selbst in den sicheren Zustand.

### (Zweites Ausführungsbeispiel)

Das in Fig. 2 gezeigte zweite Ausführungsbeispiel des Sicherheitssystems ist im Wesentlichen identisch mit dem in Fig. 1 gezeigten ersten Ausführungsbeispiel des Sicherheitssystems, so dass gleiche Teile in beiden Ausführungsbeispielen mit den gleichen Bezugszeichen versehen sind.

Das in Fig. 2 gezeigte zweite Ausführungsbeispiel des Sicherheitssystems unterscheidet sich durch die Anordnung der Überwachungseinrichtung 20 und der ersten bis vierten Widerstände 30, 31, 32, 33 außerhalb des Mehrkemprozessors 10 sowie die Funktion der Verbindung zwischen den beiden Prozessorkernen 11, 12 über den fünften Widerstands 34 von dem in Fig. 1 gezeigten ersten Ausführungsbeispiel. Das heißt, in Fig. 2 sind der erste Prozessorkern 11 und der zweite Prozessorkern 12 mittels des fünften elektrischen Widerstands 34 nur elektrisch entkoppelt, und es ist über den fünften Widerstand keine Kommunikation zwischen den Prozessorkernen 11 und 12 möglich.

### (Drittes Ausführungsbeispiel)

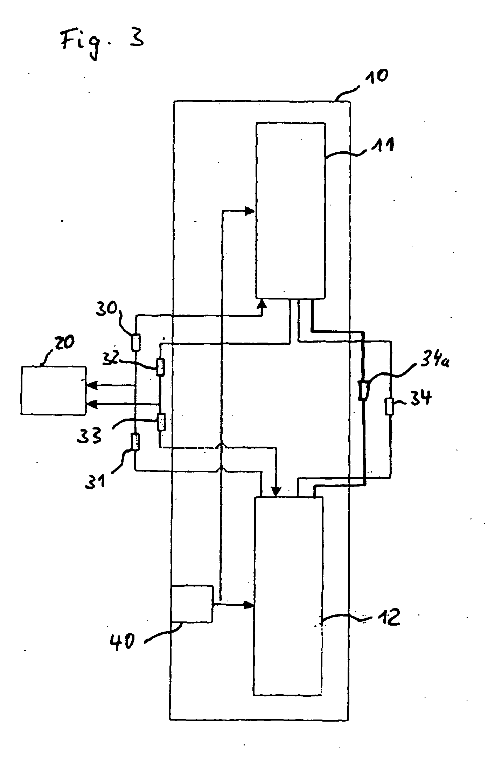

Das in Fig. 3 gezeigte dritte Ausführungsbeispiel des Sicherheitssystems ist im Wesentlichen identisch mit dem in Fig. 2 gezeigten zweiten Ausführungsbeispiel des Sicherheitssystems, so dass gleiche Teile in beiden Ausführungsbeispielen mit den gleichen Bezugszeichen versehen sind.

Das in Fig. 3 gezeigte dritte Ausführungsbeispiel des Sicherheitssystems unterscheidet sich durch die Anordnung des fünften Widerstands 34 von dem in Fig. 2 gezeigten zweiten Ausführungsbeispiel. Das heißt, in Fig. 3 sind der erste Prozessorkern 11 und der zweite Prozessorkerne 12 außerhalb des Mehrkemprozessors 10, also extern, über einen fünften elektrischen Widerstand 34 aneinander angeschlossen.

### (Allgemeines)

Die vorliegende Erfindung ist besonders vorteilhaft bei Sicherheitssteuerungen zum fehlersicheren Betrieb von technischen Anlagen. Insbesondere kann mit dem zuvor beschriebenen Sicherheitssystem und der Sicherheitssteuerung sowohl preisgünstig als auch platzsparend die Sicherheitsanforderungsstufe SIL3 der internationalen Norm IEC 65108 erfüllt werden.

Eine solche Sicherheitssteuerung zur fehlersicheren Steuerung technischer Anlagen kann ein Sicherheitssystem 1 gemäß einem der zuvor beschriebenen Ausführungsbeispiele umfassen.

Zudem kann eine solche Sicherheitssteuerung zur fehlersicheren Steuerung technischer Anlagen, bei welcher ein Sicherheitssystem 1 gemäß einem der zuvor beschriebenen Ausführungsbeispiele verwendet wird, derart ausgestaltet sein, dass der Mehrkernprozessor 10 Teil der technischen Anlage ist, die fehlersicher zu steuern ist, und die Überwachungseinrichtung 20 Teil der Sicherheitssteuerung ist.

Die zuvor beschriebenen Ausgestaltungen des Sicherheitssystems 1 können sowohl einzeln als auch in allen möglichen Kombinationen der zuvor genannten einzelnen Ausgestaltungen Verwendung finden. Zudem gelten die folgenden Modifikationen für alle Ausführungsbeispiele und sind in Kombination anwendbar.

Es ist es selbstverständlich, dass die Anzahl der Prozessorkerne frei wählbar ist und nicht auf die in Fig. 1 bis Fig. 3 gezeigte Anzahl von zwei Prozessorkernen 11, 12 beschränkt ist. Der Mehrkernprozessor kann also drei, vier, fünf, sechs usw. Prozessorkerne umfassen. Die Anzahl nach oben ist nicht beschränkt. In dem Fall von mehr als zwei Prozessorkerne 11, 12 sind jeweils die in Fig. 1 bis Fig. 3 gezeigten Anschlüsse bzw. Verbindungen zwischen der Überwachungseinrichtung 20 und jeweils zwei Prozessorkernen der mehr als zwei Prozessorkerne vorzusehen. Zudem ist zwischen jeweils zwei Prozessorkernen eine Verbindung über einen Widerstand herzustellen, welche die Funktion erfüllt, die zuvor im Zusammenhang mit der über den fünften Widerstands 34 hergestellten Verbindung im Zusammenhang mit den verschiedenen Ausführungsbeispielen beschrieben ist. Auch in diesem Fall können alle Prozessorkerne über einen Taktgenerator 40 eine gemeinsame zeitliche Taktung haben. Es ist jedoch auch möglich nur einen Teil der Prozessorkerne über einen Taktgenerator 40 mit einer gemeinsamen zeitliche Taktung zu versehen und einen anderen Teil der Prozessorkerne über einen weiteren Taktgenerator mit einer für diesen anderen Teil der Prozessorkerne gemeinsamen zeitliche Taktung zu versehen, die sich von dem von dem Taktgenerator 40 ausgegebenen zeitlichen Takt unterscheidet.

Darüber hinaus können die in Fig. 1 bis Fig. 3 gezeigten elektrischen Widerstände 30, 31, 32, 33, 34 auch aus einer Serien- und/oder Reihenschaltung mehrerer Widerstände bestehen.

Die elektrischen Widerstände 30, 31, 32, 33, 34 sind vorzugsweise rein ohmsche Widerstände. Die elektrischen Widerstände 30, 31, 32, 33, 34 können die elektrischen Widerstände von Verdrahtungsleitungen zwischen den an sie angeschlossenen Komponenten sein.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Sicherheitssystem
- 10: Mehrkernprozessor
- 11: erster Prozessorkern
- 12: zweiter Prozessorkern
- 20: Überwachungseinrichtung
- 30: erster elektrischer Widerstand
- 31: zweiter elektrischer Widerstand
- 32: dritter elektrischer Widerstand
- 33: vierter elektrischer Widerstand
- 34: fünfter elektrischer Widerstand
- 34a: sechster elektrischer Widerstand
- 40: Taktgenerator

## Patentansprüche

1. Sicherheitssystem (1) zur Sicherung einer fehlersicheren Steuerung technischer Anlagen, mit einem Mehrkernprozessor (10), der mindestens zwei Prozessorkerne (11, 12) umfasst, und einer von dem Mehrkernprozessor (10) separaten Überwachungseinrichtung (20) zur Überwachung der mindestens zwei Prozessorkerne (11, 12) dahingehend, ob die zeitliche Taktung und die logische Funktion der mindestens zwei Prozessorkerne (11, 12) vorbestimmte Sicherheitskriterien erfüllt: wobei Überwachungseinrichtung (20) eine von der zeitlichen Taktung der mindestens zwei Prozessorkerne (11, 12) unabhängige Zeitbasis hat
**dadurch gekennzeichnet, dass**
die Prozessorkerne (11, 12) mittels elektrischer Widerstände (34, 34a) miteinander verbunden sind, so dass eine zweiseitige Kommunikation zwischen den Prozessorkernen (11, 12) sowie eine elektrische Entkopplung der Prozessorkerne (11, 12) möglich ist, und die zwei Prozessorkerne (11, 12) derart ausgestaltet sind, dass sie sich gegeneinander überwachen können.

2. Sicherheitssystem nach Anspruch 1, wobei die Überwachungseinrichtung (20) zudem zur Generierung des sicheren Zustandes ausgestaltet ist und die Überwachungseinrichtung mittels des Überwachungsergebnisses erkennt, dass dieser Prozessorkern nicht die vorbestimmten Sicherheitskriterien erfüllt.

3. Sicherheitssystem nach Anspruch 1, wobei die Überwachungseinrichtung (20) zudem zur Abschaltung eines Prozessorkerns der mindestens zwei Prozessorkerne (11, 12) ausgestaltet ist, wenn die Überwachungseinrichtung (20) als Ergebnis ihrer Überwachung erkennt, dass dieser Prozessorkern nicht die vorbestimmten Sicherheitskriterien erfüllt.

4. Sicherheitssystem nach Anspruch 3, wobei das System derart gestaltet ist, dass es nach Sicherstellung des sicheren Zustandes der noch funktionierenden Kerne Diagnosefunktionen und Fehlermeldungen generiert.

5. Sicherheitssystem nach einem der vorangehenden Ansprüche, wobei die Überwachungseinrichtung (20) jeweils über mindestens einen elektrischen Widerstand (30, 31, 32, 33, 34) an die mindestens zwei Prozessorkerne (31, 32) angeschlossen ist.

6. Sicherheitssystem nach Anspruch 6, wobei die Überwachungseinrichtung (20) über einen ersten elektrischen Widerstand (30) an einen ersten Prozessorkern (11) der mindestens zwei Prozessorkerne angeschlossen ist, und die Überwachungseinrichtung (20) über einen zweiten elektrischen Widerstand (31) an einen zweiten Prozessorkern (12) der mindestens zwei Prozessorkerne angeschlossen ist, und der erste und zweite Widerstand (30, 31) an ihrem an die Überwachungseinrichtung (20) angeschlossenen Ende miteinander verbunden sind.

7. Sicherheitssystem nach Anspruch 7, wobei die Überwachungseinrichtung (20) zudem über einen dritten elektrischen Widerstand (32) an den ersten Prozessorkern (11) angeschlossen ist, und die Überwachungseinrichtung (20) über einen vierten elektrischen Widerstand (33) an den zweiten Prozessorkern (12) angeschlossen ist, und der dritte und vierte Widerstand (32, 33) an ihrem an die Überwachungseinrichtung (20) angeschlossenen Ende miteinander verbunden sind.

8. Sicherheitssystem nach einem der vorangehenden Ansprüche, wobei die vorbestimmten Sicherheitskriterien durch Sicherheitsanforderungen gemäß der Sicherheitsanforderungsstufe SIL3 der internationalen Norm IEC 65108 bestimmt sind.

9. Sicherheitssystem nach einem der vorangehenden Ansprüche, wobei die mindestens zwei Prozessorkerne (31, 32) eine gemeinsame Zeitbasis haben.

10. Sicherheitssteuerung zur fehlersicheren Steuerung technischer Anlagen, mit einem Sicherheitssystem (1) nach einem der vorangehenden Ansprüche.

11. Sicherheitssteuerung nach Anspruch 10, wobei der Mehrkernprozessor (10) Teil einer technischen Anlage ist, die fehlersicher zu steuern ist, und die Überwachungseinrichtung (20) Teil der Sicherheitssteuerung ist.

## Claims

1. Safety system (1) for ensuring failsafe control of technical installations, having a multicore processor (10) which comprises at least two processor cores (11, 12), and a monitoring device (20) which is separate from the multicore processor (10) and is intended to monitor the at least two processor cores (11, 12) in order to determine whether the time clocking and the logical function of the at least two processor cores (11, 12) satisfy predetermined safety criteria, the monitoring device (20) having a time base which is independent of the time clocking of the at least two processor cores (11, 12),
**characterized in that**
the processor cores (11, 12) are connected to one another by means of electrical resistors (34, 34a), with the result that two-way communication between the processor cores (11, 12) and electrical decoupling of the processor cores (11, 12) are possible, and the two processor cores (11, 12) are configured in such a manner that they can monitor each other.

2. Safety system according to Claim 1, the monitoring device (20) also being configured to generate the safe state, and the monitoring device using the monitoring result to detect that this processor core does not satisfy the predetermined safety criteria.

3. Safety system according to Claim 1, the monitoring device (20) also being configured to switch off one processor core of the at least two processor cores (11, 12) if the monitoring device (20) detects, as the result of its monitoring, that this processor core does not satisfy the predetermined safety criteria.

4. Safety system according to Claim 3, the system being configured in such a manner that it generates diagnostic functions and error messages after ensuring the safe state of the cores which are still functioning.

5. Safety system according to one of the preceding claims, the monitoring device (20) being connected to the at least two processor cores (11, 12) via at least one electrical resistor (30, 31, 32, 33, 34) in each case.

6. Safety system according to Claim 6, the monitoring device (20) being connected to a first processor core (11) of the at least two processor cores via a first electrical resistor (30), and the monitoring device (20) being connected to a second processor core (12) of the at least two processor cores via a second electrical resistor (31), and the first and second resistors (30, 31) being connected to one another at their end connected to the monitoring device (20).

7. Safety system according to Claim 7, the monitoring device (20) also being connected to the first processor core (11) via a third electrical resistor (32), and the monitoring device (20) being connected to the second processor core (12) via a fourth electrical resistor (33), and the third and fourth resistors (32, 33) being connected to one another at their end connected to the monitoring device (20).

8. Safety system according to one of the preceding claims, the predetermined safety criteria being determined by safety requirements according to safety requirement level SIL3 of the international standard IEC 65108.

9. Safety system according to one of the preceding claims, the at least two processor cores (11, 12) having a common time base.

10. Safety controller for the failsafe control of technical installations, having a safety system (1) according to one of the preceding claims.

11. Safety controller according to Claim 10, the multicore processor (10) being part of a technical installation to be controlled in a failsafe manner, and the monitoring device (20) being part of the safety controller.

## Revendications

1. Système de sécurité (1) destiné à protéger une commande sécurisée d'installations techniques, le système présentant :
un processeur (10) à plusieurs noyaux qui comporte au moins deux noyaux (11, 12) de processeur et
un dispositif de surveillance (20) séparé du processeur (10) à plusieurs noyaux et qui surveille les deux ou plusieurs noyaux (11, 12) du processeur pour vérifier si la cadence d'horloge et le fonctionnement logique des deux ou plusieurs noyaux (11, 12) du processeur satisfont à des critères prédéterminés de sécurité,
le dispositif de surveillance (20) possédant une base temporelle indépendante de la cadence d'horloge des deux ou plusieurs noyaux (11, 12) du processeur,
**caractérisé en ce que**
les noyaux (11, 12) du processeur sont raccordés l'un à l'autre au moyen de résistances électriques (34, 34a) de manière à permettre une communication bidirectionnelle entre les noyaux (11, 12) du processeur ainsi qu'un découplage électrique des noyaux (11, 12) du processeur et
**en ce que** les deux noyaux (11, 12) du processeur sont configurés de manière à pouvoir se surveiller mutuellement.

2. Système de sécurité selon la revendication 1, dans lequel le dispositif de surveillance (20) est de plus configuré pour générer l'état sécurisé et en ce que le dispositif de surveillance détecte au moyen du résultat de la surveillance si ce noyau du processeur satisfait ou non aux critères de sécurité prédéterminés.

3. Système de sécurité selon la revendication 1, dans lequel le dispositif de surveillance (20) est ce plus configuré pour débrancher l'un des deux ou plusieurs noyaux (11, 12) du processeur lorsque le dispositif de surveillance (20) détecte comme résultat de sa surveillance que ce noyau du processeur ne satisfait pas aux critères prédéterminés de sécurité.

4. Système de sécurité selon la revendication 3, dans lequel le système est configuré de telle sorte qu'après avoir assuré l'état sécurisé des noyaux fonctionnant encore, il déclenche des fonctions de diagnostic et des messages d'erreur.

5. Système de sécurité selon l'une des revendications précédentes, dans lequel le dispositif de surveillance (20) est raccordé par au moins une résistance électrique (30, 31, 32, 33, 34) respective aux deux ou plusieurs noyaux (11, 12) du processeur.

6. Système de sécurité selon la revendication 6, dans lequel le dispositif de surveillance (20) est raccordé par l'intermédiaire d'une première résistance électrique (30) à un premier noyau (11) des deux ou plusieurs noyaux du processeur, le dispositif de surveillance (20) étant raccordé par l'intermédiaire d'une deuxième résistance électrique (31) à un deuxième noyau (12) des deux ou plusieurs noyaux du processeur, la première et la deuxième résistance (30, 31) étant raccordées l'une à l'autre à leur extrémité raccordée au dispositif de surveillance (20).

7. Système de sécurité selon la revendication 7, dans lequel le dispositif de surveillance (20) est de plus raccordé par l'intermédiaire d'une troisième résistance électrique (32) au premier noyau (11) du processeur, le dispositif de surveillance (20) étant raccordé par l'intermédiaire d'une quatrième résistance électrique (33) au deuxième noyau (12) du processeur, la troisième et la quatrième résistance (32, 33) étant raccordées l'une à l'autre à leur extrémité raccordée au dispositif de surveillance (20).

8. Système de sécurité selon l'une des revendications précédentes, dans lequel les critères prédéterminés de sécurité sont déterminés par des spécifications de sécurité de la section SIL3 des spécifications de sécurité de la norme internationale IEC 65108.

9. Système de sécurité selon l'une des revendications précédentes, dans lequel les deux ou plusieurs noyaux (11, 12) du processeur ont une base temporelle commune.

10. Commande sécurisée permettant de commander de façon sécurisée des installations techniques et présentant un système de sécurité (1) selon l'une des revendications précédentes.

11. Commande sécurisée selon la revendication 10, dans laquelle le processeur (10) à plusieurs noyaux fait partie d'une installation technique qui doit être commandée de manière sécurisée et en ce que le dispositif de surveillance (20) fait partie de la commande sécurisée.
